# EUROPEAN PATENT SPECIFICATION

(11) **EP 4 373 660 B1**
(45) Date of publication and mention of the grant of the patent: **04.11.2026**
(21) Application number: 22754788.2
(22) Date of filing: 13.07.2022
(51) Int. Cl.: B29D 99/00, B29C 70/44, B29C 70/54

(54) **ASSEMBLY STRUCTURE AND PROCESS FOR MANUFACTURING A COMPOSITE PART WITH CONTROLLED GEOMETRY**
MONTAGESTRUKTUR UND VERFAHREN ZUR HERSTELLUNG EINES VERBUNDTEILS MIT KONTROLLIERTER GEOMETRIE
STRUCTURE D'ASSEMBLAGE ET PROCÉDÉ DE FABRICATION D'UNE PIÈCE COMPOSITE À GÉOMÉTRIE CONTRÔLÉE

(30) Priority: 19.07.2021 GB 202110372
(43) Date of publication of application: 29.05.2024
(73) Proprietor: Safran Nacelles, 76700 Gonfreville-l'Orcher (FR); Safran Nacelles Limited, Burnley, Lancashire BB10 2TQ (GB)
(72) Inventor: LORRILLARD, Julien, 77550 MOISSY-CRAMAYEL (FR); DESJOYEAUX, Bertrand, Léon, Marie, 77550 MOISSY-CRAMAYEL (FR)
(74) Representative: Cabinet Beau de Loménie
(86) International application number: PCT/EP2022/069693
(87) International publication number: WO 2023/001677

(56) References cited:
- EP-A1- 2 440 395
- EP-A1- 3 587 249
- EP-A2- 1 311 768
- GB-A- 2 316 036

## Description

### Technical field

The present disclosure relates to an assembly structure for manufacturing a composite part comprising a stiffener joined to a skin.

### Prior art

The manufacture of composite material parts has been known for many years, in particular the manufacture of parts comprising a stiffener joined by molding to a skin that it reinforces, and in particular a stiffener with a so-called omega section and/or a hollow stiffener.

Such composite parts are used in many industries and in particular in aeronautics.

Various techniques for manufacturing these composite parts are known.

In certain processes, the omega stiffener is molded separately and joined to the skin in a second operation (by mechanical assembly or by gluing). This technique is expensive, allows a good geometrical control of the stiffeners, but presents the difficulties of docking the prefabricated part on the skin structure.

In other processes, whether with pre-impregnated materials or via liquid and usually infusion processes, the stiffener is formed on the skin by surrounding a core. This presents the difficulty of controlling the geometry of the stiffener and the geometry of the bond to the skin, coupled with the control of the geometry of the skin and its surface quality.

US2020001547A1 discloses an assembly structure for manufacturing a composite part comprising a stiffener joined to a skin.

There is therefore a need to improve these techniques in order to better control the geometry of the composite parts thus manufactured.

### Disclosure of the invention

The subject matter of the invention is thus an assembly structure for manufacturing a composite part according to claim 1.

The use of at least one stiffener tooling enveloping the stiffener preform allows control of the relative positioning (geometry) of the stiffener preform with respect to the skin preform. This or these local rigid stiffener toolings also allow control of the cross-sectional geometry of the generally omega-shaped stiffener and, in particular, the shape of the connection areas of the stiffener section segments. The generally omega shape (this shape can include shapes such as a U- or V-shape) is particularly suitable for the cross-section of a stiffener backed by a surface part. Indeed, the fact that the stiffener is connected to the surface part it reinforces by two distinct areas (feet) gives it a very good mechanical stability which prevents it from buckling under the effect of bending moments and torsion moments. However, the control of the connection geometry between the stiffener and the fibrous texture in the connection area is important for the good behavior of the stiffener. One of the advantages of the structure in accordance with the invention is to ensure geometric control of the composite and the fibers of its preform in the connection area with the surface skin. Another advantage of the structure in accordance with the invention is to be able to maintain the shape of the stiffener preform in a controlled manner from the moment it is installed between the two connection areas of the rigid tooling until it is associated with the skin preform and until the consolidation of the whole part constituted by the skin and the stiffener, thus reducing the risks of deformation.

In accordance with other possible features, taken alone or in combination:
- the generally omega-shaped stiffener preform cross-section comprises two lateral flanks which are each connected, by a first of their two opposite ends, to a common portion forming the apex of the omega and, by each of their second opposite ends, to a foot of the omega;
- said at least one local rigid stiffener tooling extends transversely (locally) around the stiffener preform cross-section covering the lateral flanks of the omega and at least part of at least one or both feet of the omega (a terminal end of each foot may be left covered or uncovered depending on the configurations);
- said at least one local rigid stiffener tooling extends transversely (locally) around the stiffener preform cross-section, covering the lateral flanks and at least part of one or both feet of the omega and extending beyond the terminal end of at least one foot towards the first surface of the skin preform to be disposed directly opposite thereto;
- said at least one local rigid stiffener tooling has a portion located opposite each of the connection areas between each of the flanks and the adjacent foot of the omega of the stiffener preform, each tooling portion having a predetermined geometric radius of curvature; the radius is for example less than 5mm, preferentially 3mm, even more preferentially 1mm,
- the assembly structure comprises a sealing device between the flexible envelope and said at least one rigid skin tooling;
- the assembly structure comprises, on the one hand, a device for creating a vacuum in an internal volume delimited jointly by the flexible envelope and said at least one rigid skin tooling with respect to the outside of the assembly structure and, on the other hand, one or more conduits for injecting a resin;
- said at least one rigid skin tooling comprises said at least one resin infusion tooling which comprises the conduit or conduits for injecting a resin between this tooling and the flexible envelope;
- the resin infusion tooling is disposed opposite (e.g., above) the second surface of the skin preform and the flexible envelope is disposed opposite (e.g., below) said at least one rigid skin tooling or
   the resin infusion tooling is disposed opposite (e.g., below) the second surface of the skin preform and the flexible envelope is disposed opposite (e.g., above) said at least one rigid stiffener tooling;
- the flexible envelope has one or more passages for injecting a resin between said at least one rigid skin tooling and the flexible envelope;
- the flexible envelope or said at least one rigid skin tooling has at least one hole for effecting depressurization;
- the positioning tooling comprises at least one cavity whose shape is adapted to receive said at least one rigid stiffener tooling and the stiffener preform as well as at least partly the flexible envelope.

Another subject matter of the invention is a process for manufacturing a composite part according to claim 11.

The process provides the same advantages as those disclosed above in relation to the above system and will therefore not be repeated here.

In accordance with other possible features:
- the generally omega-shaped stiffener preform cross-section comprising two lateral flanks which are each connected, at a first of their two opposite ends, to a common portion forming the apex of the omega and, at each of their second opposite ends, to a foot of the omega, said at least one local rigid stiffener tooling is positioned so as to extend transversely around the stiffener preform cross-section covering the lateral flanks of the omega and part of the feet of the omega;
- the generally omega-shaped stiffener preform cross-section comprising two lateral flanks which are each connected, at a first of their two opposite ends, to a common portion forming the top of the omega and, at each of their second opposite ends, to a foot of the omega, said at least one local rigid stiffener tooling is positioned to extend transversely around the stiffener preform cross-section covering the lateral flanks and feet of the omega and extending beyond the terminal end of each foot toward the first surface of the skin preform to be disposed directly opposite thereto;
- a core is positioned within the hollow stiffener preform, on the side of its first surface, prior to positioning the stiffener preform relative to the skin preform;
- the core is hollow or is a solid and, whatever the configuration, the core is permanent or removable (e.g., fusible);
- a seal is made between the flexible envelope and the rigid skin tooling;
- an internal volume delimited jointly by the flexible envelope and the rigid skin tooling is subjected to a vacuum with respect to a pressure external to the flexible envelope and the rigid skin tooling;
- the rigid skin tooling is a resin infusion tooling and a resin is injected through this tooling between the flexible envelope and the rigid skin tooling;
- the stiffener preform is formed within said at least one rigid stiffener tooling prior to simultaneous positioning of the stiffener preform assembly and said at least one rigid stiffener tooling relative to the skin preform;
- the process further comprises consolidating the set of stiffener and skin preforms thus positioned by polymerizing a resin intimately bonding these preforms together;
- the resin is injected by liquid means into the set of preforms or the preforms are pre-impregnated with resin or the resin is present in the form of resin films disposed beside the set of preforms.

### Brief description of the drawings

Other features and advantages of the subject matter of the present disclosure will be apparent from the following description of embodiments, given by way of non-limiting examples, with reference to the appended figures.
[Fig. 1] Figure 1 is a schematic general view of an assembly structure in accordance with an embodiment of the invention;
[Fig. 2] Figure 2 is a schematic general view of an assembly structure in accordance with another embodiment of the invention;
[Fig. 3] Figure 3 is a schematic general view of an assembly structure in accordance with yet another embodiment of the invention;
[Fig. 4] Figures 4(a), 4(b) and 4(c) are schematic views showing possible stiffener preform tooling configurations;
[Fig. 5] Figures 5(a), 5(b) and 5(c) are schematic views showing other possible stiffener preform tooling configurations;
[Fig. 6] Figure 6 is a schematic view showing a possible example embodiment of a stiffener preform;
[Fig. 7] Figure 7 is a schematic view illustrating a portion of the process for manufacturing a composite part from an assembly structure in accordance with an embodiment of the invention;
[Fig. 8] Figure 8 is a schematic view illustrating another part of the manufacturing process shown in Figure 7;
[Fig. 9] Figure 9 is an inverted schematic view of the configuration of Figure 8;
[Fig. 10] Figure 10 shows a schematic view of a curved structure similar to the structure of Figure 1.

### Detailed description

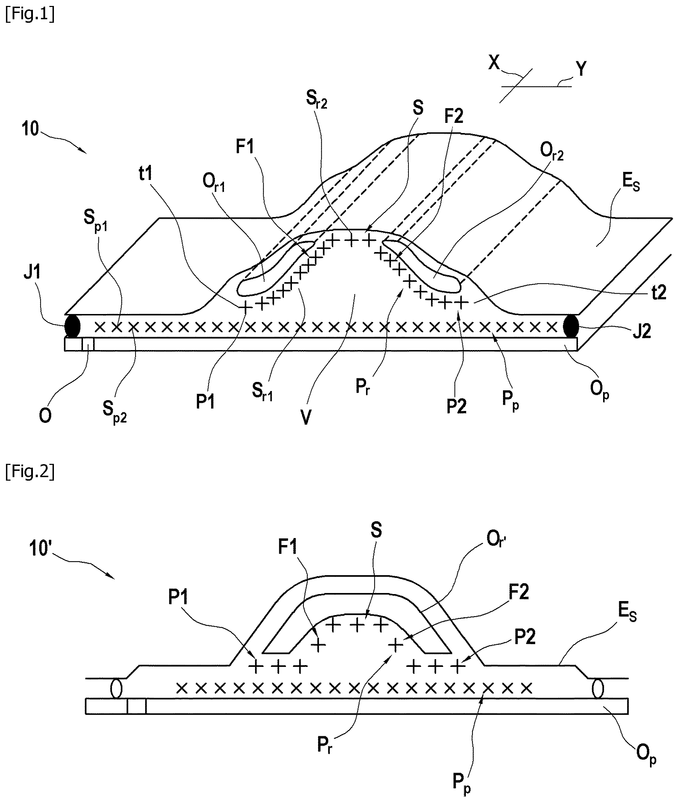

An assembly structure 10 for manufacturing a composite material part in accordance with an embodiment of the invention is shown schematically in Figure 1 and mainly comprises a set of preforms comprising a skin preform Pp and a stiffener preform Pr as well as adapted toolings.

"Preform", in the sense of the following description, is generally understood to mean a mat or set of mats made up of layers of fibers arranged together in textile patterns such as 2D fabrics, NCF, 3D fabrics, flat braids, stacked in one or more layers and deformable to adapt to the associated tooling and suitable for being consolidated by a resin. These preforms are mainly made of carbon, glass or Kevlar fibers, or even natural fibers such as flax or others. These preforms are then associated with organic resins, either from petrochemicals (polyester, vinyl ester, epoxy resins) or bio-based. The preforms can also be made of ceramic fibers (such as alumina or silicon carbide) which are then associated with slurries containing ceramic powders or liquid resin precursors of ceramics.

More particularly, the skin preform Pp has a first surface Sp1 and a second surface Sp2 opposite the first which are separated from each other by a thickness ep and the stiffener preform Pr has a first surface Sr1 and a second surface Sr2 opposite the first which are separated from each other by a thickness er.

In the assembly structure shown, the first surface Sr1 of the stiffener preform Pr is disposed opposite the first surface Sp1 of the skin preform Pp and extends along the latter, on the one hand, along a longitudinal axis X and, on the other hand, transversely with respect to this longitudinal axis, along a transverse axis Y, in the form of a stiffener preform cross-section.

The stiffener preform Pr has a generally omega-shaped cross-section. This general shape includes two lateral flanks F1, F2 that extend along the X axis (as partially illustrated in the perspective of Figure 1) and each have opposite first and second ends. The two lateral flanks F1, F2 are each connected by their first end (here the upper end in Figure 1) to a common portion S that forms the apex or cap of the generally omega shape (it should be noted that the two lateral flanks F1, F2 can each be connected directly to each other by their first end and the common portion forming the apex/cap S is reduced to the junction between the two first ends of the two lateral flanks). Each of the two lateral flanks F1, F2 is also connected by its second opposite end (here the lower end in Figure 1) to a foot or wing P1, P2 of the generally omega shape.

These features of the generally omega shape are common to several particular shapes which are included in the generally omega shape in the sense of the present invention such as a general U or V shape in each of which the lateral flanks F1, F2, the common portion forming the apex/cap S and the feet/wings P1, P2 take on adapted shapes and orientations.

The assembly structure 10 shown in Figure 1 includes a rigid skin tooling Op that is disposed opposite the second surface Sp2 of the skin preform and extends along the entirety of this second surface (below the skin preform in Figure 1). In the configuration of Figure 1 the tooling Op serves as a support for the skin preform, as well as for the other components of the structure 10.

The assembly structure also comprises at least one local rigid stiffener tooling that extends both longitudinally, along the X axis, and transversely, along the Y axis, so as to at least partially cover or envelop the second surface Sr2 (outer surface as opposed to the first inner surface facing the skin preform) of the stiffener preform.

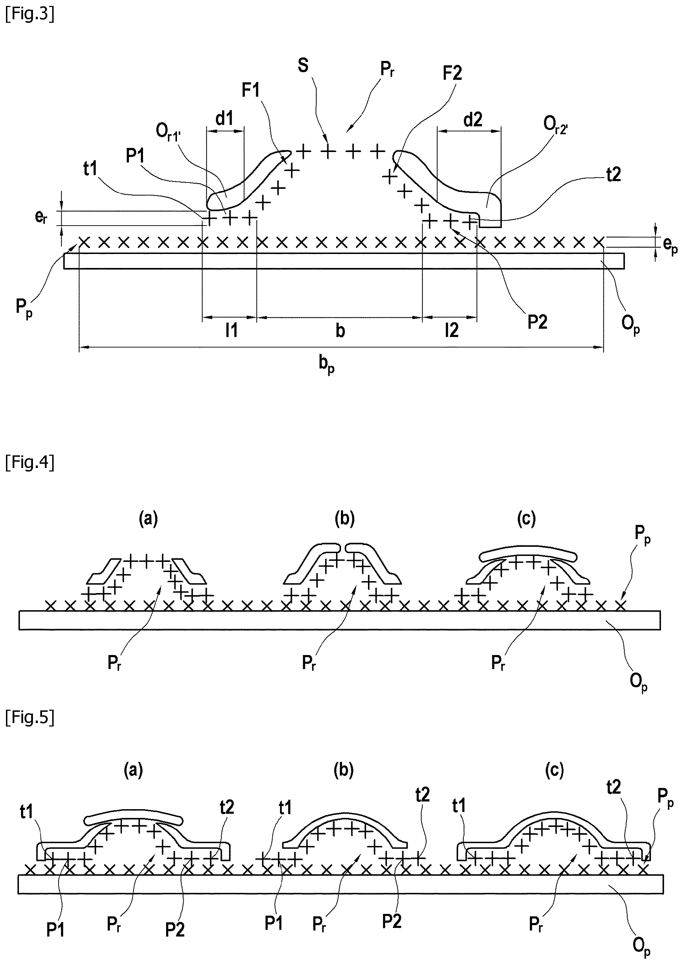

More particularly, said at least one local rigid stiffener tooling extends transversely, around the stiffener preform cross-section, i.e., locally relative to this preform, along a transverse dimension which is smaller than the transverse dimension bp of the first surface Sp1 of the skin preform (the transverse dimension bp illustrated in Figure 3 also corresponds to the transverse dimension bp of the second surface Sp2). Thus, said at least one local rigid stiffener tooling does not extend along the entire first skin preform surface Sp1 as with the rigid skin tooling Op.

In the example shown in Figure 1, the assembly structure 10 more particularly comprises two local rigid stiffener toolings Or1 and Or2 (it can also be considered as a two-part tooling) which are respectively disposed opposite the lateral flanks F1, F2 and at least part of the feet P1, P2 of the generally omega shape, along the entire longitudinal dimension (along the X axis) of the lateral flanks.

Each local rigid stiffener tooling Or1, Or2 extends transversely, on either side of the stiffener preform cross-section, covering one of the two lateral flanks F1, F2 of the generally omega shape and at least part of the corresponding foot P1, P2 of the omega. Here, each local rigid stiffener tooling is disposed opposite only a part of the foot, thus leaving uncovered a terminal (free) end t1, t2 of each foot. It will be noted that the two local rigid stiffener toolings cover only the lateral parts of the stiffener preform and stop at the common apex portion S, thus leaving the latter uncovered. In other example embodiments described hereinafter, said at least one local rigid stiffener tooling, whether formed of one or more toolings or tooling parts, may cover the lateral flanks and the feet of the omega, extending beyond the terminal end t1, t2 of each foot towards the first surface Sp1 of the skin preform Pp to be disposed via a dropped free edge, directly facing the same.

Rigid tooling in the sense of this description means that the tooling is not susceptible to deformation when used to make a composite part, or at least that the deformation of the tooling is negligible, i.e., dimensional variations are less than 1%. This implies that the tooling retains its shape and mechanical strength even when the structure is subjected to the temperature and pressure conditions that are necessary to manufacture the composite part.

The assembly structure 10 also comprises a flexible envelope or barrier system Es that covers, here from above, said at least one rigid stiffener tooling Or1, Or2 and the first surface Sp1 of the skin preform Pp. This flexible envelope system Es comprises a sealed barrier envelope that can be connected/attached to the periphery of the rigid skin tooling Op, thereby trapping the set of both preforms and said at least one stiffener tooling together with the rigid skin tooling. This envelope is flexible in the sense that it is capable of deforming during the manufacturing process of the composite part and, in particular, when a pressure differential is applied between the outside of the assembly structure and the inside and thus presses the envelope against the surface or surfaces opposite which it is disposed in order to follow the contours of this or these surfaces.

It should be noted that the skin tooling Op comprises a tap or through-hole (passage) o which allows the air present in the internal volume delimited by the skin tooling and the envelope Es to be drawn out in order to generate a vacuum in this volume with respect to the pressure external to the structure. Alternatively, such a tap or through-hole for depressurization can be arranged on the flexible envelope (alternative not shown).

A sealing device symbolized by seals J1, J2 is provided between the flexible envelope Es and the skin tooling Op in order to achieve a fluidic seal of the assembly structure between the outside and the inside thereof. For example, it may be a peripheral sealing device made with a single seal device.

Figure 2 is a schematic view illustrating in cross-section another configuration of assembly structure 10' with a single local rigid stiffener tooling Or' associated with the stiffener preform Pr. The local rigid stiffener tooling Or' here has a generally omega shape adapted to span the generally omega-shaped cross-section of the stiffener preform Pr and which is particularly adapted to abut the lateral flanks F1, F2, the apex S and the feet P1, P2 (in whole or in part) of the omega. What has been described in relation to Figure 1 also applies to Figure 2 except for the particularities related to the toolings or tooling parts Or1 and Or2.

Figure 3 illustrates different relative dimensions between the skin preform Pp, the stiffener preform Pr and the stiffener tooling(s) which can take different shapes. In this figure, two stiffener toolings or parts of stiffener toolings are shown in different possible shapes: one Or1' disposed against the lateral flank F1 and the foot P1 (the terminal end t1 or free edge of the latter is not covered by the tooling) and the other Or2' disposed against the lateral flank S2 and the foot P2, covering the terminal end t2 or free edge of the latter so as to be directly opposite the skin preform. It should be noted that these two different forms of tooling may coexist within the same stiffener tooling or the two toolings or parts of tooling may be symmetrical to each other. In particular, the stiffener may be asymmetrical in cross-section and have two different end shapes at the feet P1 and P2. It should be noted that the same stiffener can also combine multiple shapes among those (a), (b) and (c) shown in the following figures. As in Figure 1, the two toolings are here disjoint and do not overlap the common portion forming apex S of the stiffener preform.

The stiffener preform Pr has a height h which extends perpendicularly to the two dimensions of the skin preform (along the X and Y axes), a width b between the two feet P1 and P2 (this is the width of the hollow or concave part of the preform), a width I1 and I2 for each of the two feet P1 and P2 (the width may be the same for each of the two feet or different, for example in the case of a stiffener close to one of the free edges of the skin preform; in the latter configuration, the width of the foot close to the free edge can be adjusted to avoid very close folds) and a thickness er. It should be noted that these dimensions characterizing the cross-section of a stiffener evolve as it is positioned along the X direction where they are expressed, in order to meet the functional needs of the part (for example, modification of the height, for spacing with an adjacent part or stiffening by the shape, modification of the width of the foot/feet, variation of the thickness of the preform, in accordance with the local mechanical needs).

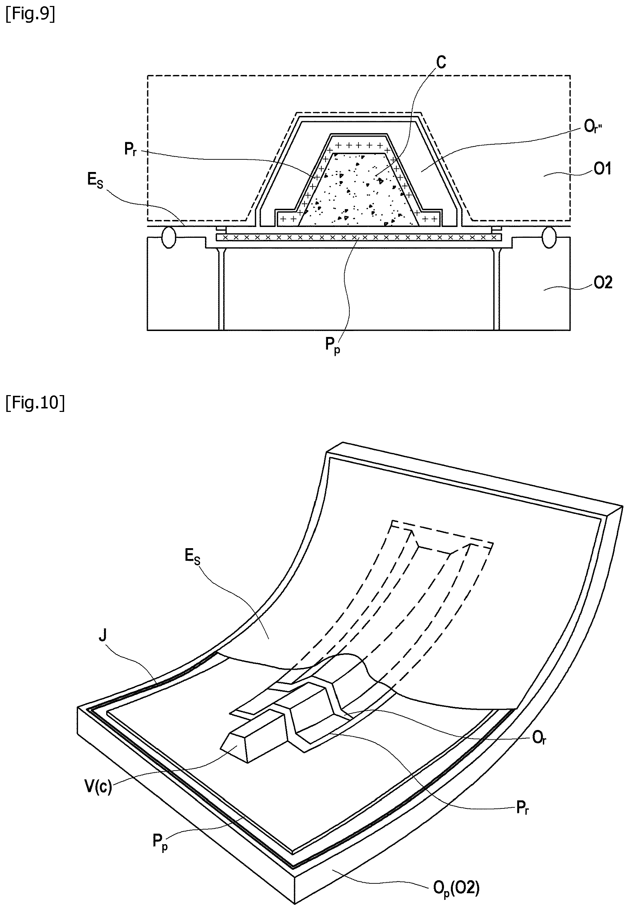

It should also be noted that the stiffener extends along the surface of the skin, which skin is rarely flat and may have curvatures in both directions (X and/or Y) as shown in Figure 10.

In the Or1' tooling configuration, the latter comprises a foot or base that extends transversely along the foot P1 of the stiffener preform along a dimension d1 that is less than or equal to the transverse dimension I1 of the foot P1.

In the Or2' tooling configuration, the latter comprises a foot or base that extends, on the one hand, transversely along the foot P2 of the stiffener preform along the entire transverse dimension of the latter and, on the other hand, vertically, in the form of a dropped edge, in the direction of the skin preform along the free edge t2 of the foot P2 so as to cover the latter and come directly opposite the second surface of the skin preform. The transverse dimension or extension d2 of the foot/base of the tooling is greater than the transverse dimension 12 of the foot P2. The feet/bases of the different tooling configurations in Figure 3 and in the preceding and following figures are disposed parallel to the surfaces of the skin preform and to the surface of the skin tooling facing the skin preform in order to ensure a controlled geometry of the part being manufactured.

The skin preform Pp has a thickness ep and a transverse dimension or extension bp to accommodate multiple stiffeners on its surface.

By way of example, the previously defined dimensions can take the following values: h varies from 5 to 80 mm, b varies from 25 to 100 mm, I1/I2 varies from 15 to 50 mm, er varies from 0.8 mm to 8 mm, d1/d2 varies from 15 to 70 mm, ep varies from 0.8 to 8 mm and bp varies from 150 to more than 2000 mm (thus allowing a stiffener to be positioned at most every 200 to 800 mm).

Figures 4(a), 4(b), 4(c), 5(a), 5(b) and 5(c) schematically illustrate several possible configurations of local rigid stiffener tooling(s) associated with a stiffener preform Pr of generally omega-shaped cross-section that is disposed opposite a first skin preform surface Pp, itself disposed by its opposite second surface opposite a skin tooling Op.

In the configuration of Figure 4(a) the stiffener tooling is in two parts or is formed of two toolings each forming an L disposed opposite one of the two lateral flanks and one of the two feet of the stiffener preform, thus leaving an open space at the top of the stiffener preform.

In the configuration of Figure 4(b) the stiffener tooling is always in two parts (or two toolings) each forming an L, or an S, or even a Z disposed opposite one of the two lateral flanks and one of the two feet of the stiffener preform and which are disposed together adjacent to the top of the stiffener preform.

In the configuration of Figure 4(c) the stiffener tooling is still in two parts (or two toolings) each forming an L disposed opposite one of the two lateral flanks and one of the two feet of the stiffener preform, as in the configuration of Figure 4(a), but with the addition of a third tooling part forming a cap and covering the top of the stiffener preform as well as the upper portion of the two stiffener tooling lateral parts.

The tooling configuration of Figure 5(a) is similar to the configuration of Figure 4(c) but differs in that the free edges of the feet or bases of the two stiffener tooling lateral parts extend along the feet P1, P2 of the stiffener preform, respectively, to cover the terminal end t1, t2 thereof with a dropped edge, as with the Or2' tooling of Figure 3.

The tooling configuration in Figure 5(b) illustrates a local rigid one-piece stiffener tooling like that in Figure 2. In Figure 5(b) the tooling extends only along a portion of the feet P1 and P2 of the stiffener preform, thus leaving uncovered terminal ends t1, t2 of the feet as with the Or1' tooling of Figure 3.

The tooling configuration of Figure 5(c) also illustrates a local rigid one-piece stiffener tooling like that of Figure 5(b) but whose feet/bases are extended along the feet P1, P2 of the stiffener preform by free edges each forming a dropped edge that covers the terminal end t1, t2, as in the configuration of Figure 5(a). The choice of a tooling configuration Or can be made in particular in accordance with the complexity of the part geometry, the organization of the part structure at the level of the stiffener, the filling element of the stiffener internal volume (if it is rigid or flexible), the flexibility of the stiffener width change, etc. In a simplified configuration, the tooling is in one part with perfectly controlled foot angles (connection areas between flanks and feet).

It should be noted that other variations of tooling configurations not shown are also possible.

Generally, the feet or bases of the rigid stiffener tooling(s) each extend parallel to the skin tooling over a distance or area of transverse extent that is limited relative to the transverse extent bp (Fig. 3) of the skin preform and the skin tooling.

Regardless of the configuration or combination of rigid Oᵣ stiffener tooling chosen, the tooling comprises a geometry for molding whose shape is that of the stiffener preform in the connection area between the surface F1, F2 (flank) and the surface P1, P2 (foot). This cross-sectional geometry can be a circular or elliptical arc, or even any other curvilinear shape whose curvature always remains oriented in the direction towards the second face (Sr2 in Figure 1) of the stiffener preform (no inflection in the profile). The minimum radius of this shape is preferably chosen to be less than 5 mm, more preferentially less than 3 mm, and even more preferentially less than 1 mm. This feature of the tooling allows the spatial positioning of the stiffener preform in this connection area, which is often crucial to the geometric strength of the part and to its good mechanical behavior, to be shaped in a controlled manner. A small radius in the connection area, such as those given as an example above, advantageously ensures the geometric strength of the part as well as its good mechanical behavior. Such a radius is obtained thanks to the arrangement of this rigid part of the tooling opposite each connection area. This configuration reduces the longitudinal porosities at the inflection (connection area) between the flank and the bottom of the stiffener preform.

It should be noted that the internal volume or space V (concave area of the stiffener preform) delimited by the stiffener preform Pr and the skin preform Pp (Fig. 1) is generally filled by an element often referred to as the core.

This element can be a solid material (full solid) that remains trapped in the composite part after consolidation with a resin. It is then a permanent core.

Alternatively, this element can be a solid material that is removed from the composite part after consolidation with a resin. In this case, it is a solid core that can be removed, for example, by dissolving it with water or melting it (fusible solid core).

Alternatively, this element may be a solid material that is shrunk and removed from the internal volume after the resin has sufficiently cured. For example, an elastomeric material may be suitable.

Alternatively, this element can be a semi-rigid hollow material, such as a thick elastomer body. The hollow element can be a permanent or removable core (e.g., fusible).

Alternatively, this element can be a hollow material such as a flexible sealed film. In such flexible hollow body configurations (semi-rigid or film), the interior volume of the hollow body must be isolated from the volume delimited by the skin and stiffener preforms. The inner volume of the core is, for example, completely sealed or connected to an external fluid (gaseous or liquid) to which a pressure greater than the pressure of the volume delimited by the preforms can be applied in order to ensure the compaction of the preforms with respect to the tooling.

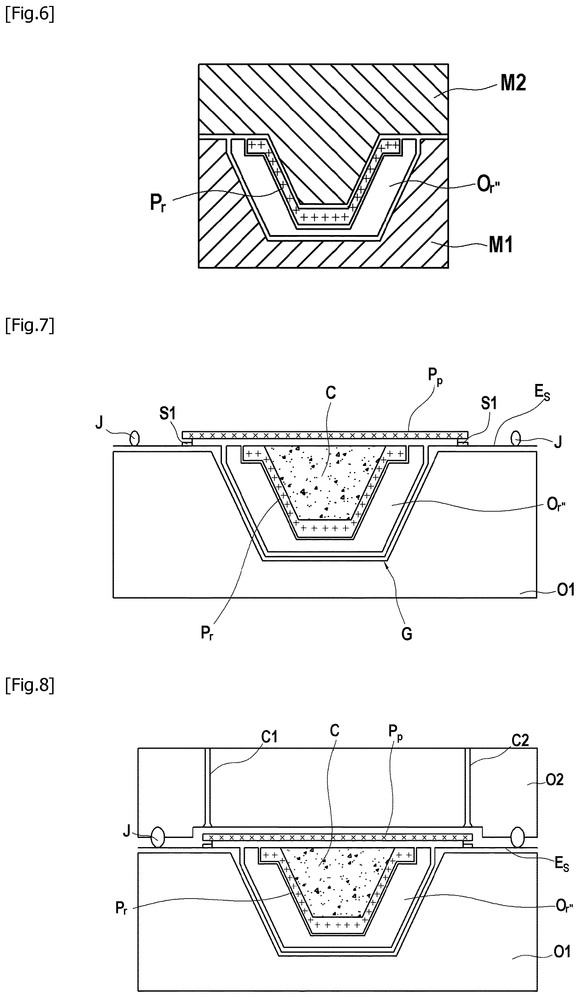

A process for manufacturing a composite part comprising a stiffener joined to a skin in accordance with an embodiment of the invention will now be described with reference to Figures 6 and following.

This process implements an assembly structure such as one of those described above and which involves stiffener and skin preforms and associated tooling as described above. Other examples of assembly structure may also be suitable.

In the case of a fibrous preform, Figure 6 illustrates a preliminary step of the process during which a stiffener preform Pr is manufactured. In this example, the stiffener preform is obtained in a manufacturing mold comprising, on the one hand, a female part M1 in which a rigid stiffener tooling Or" is disposed, comprising, in a general way, the features of the local rigid stiffener toolings described above and inside which the stiffening preform is to be manufactured, and, on the other hand, a male part M2 intended to be inserted into the female part, and more particularly inside the rigid stiffener tooling Or". The fibrous preform is positioned in the tooling Or", itself positioned in the tooling M1. Closing with the part M2 of the tooling allows the fibers to be shaped or "pushed" to conform to the shape of the tooling Or" and to ensure that the foot and top radii of the omega stiffener are controlled. A thermal cycle can then be applied to freeze the preform in this position (for example, obtained by melting a powder present on the preform). The preform thus formed does not contain any resin. It should be noted that any other type of preform shaping process may be suitable. In this example, the local rigid stiffener tooling Or" has, for example, the general shape shown in Figure 5(c) although the other shapes described above may also be suitable.

When the stiffener preform Pr has been produced, the two parts of the mold can be moved apart and the assembly formed by the tooling Or" and the preform Pr can be removed together from the female part M1 in order to be positioned, for example, in a cavity or groove G of a positioning tooling O1 (Figure 7) whose shape is adapted to receive the flexible envelope, the local rigid stiffener tooling and the stiffening preform (the shape of the cavity may differ in particular if the tooling is in several parts and/or the general shape of the preform varies). The fact of handling the preform together with the associated rigid tooling protects the preform and thus allows it to be moved from one place to another (for example, for a tooling change or a change of manufacturing step) without risking damage (robustness of the handling of the preform) and thus introducing manufacturing defects. In the prior art, the handling of dry preforms (not yet impregnated with resin) is an operation that is known to be tricky and to introduce defects into the preforms even before they are assembled with other preforms. The manufacturing process of such a preform is therefore much more repeatable than in the prior art since the human factor is greatly reduced.

Generally, the process in accordance with an embodiment of the invention comprises the following steps:
- A) stack the components of the structure in accordance with the sequence defined above;
- B) make a sealed enclosure around the preforms delimited by the flexible envelope, said at least one rigid stiffener tooling, the rigid skin tooling, in particular by peripheral sealing between the flexible envelope and the periphery of the skin tooling;
- C) consolidate the preform by polymerizing the resin associated with the set of preform elements;
- D) remove the piece thus obtained from the mold.

Prior to positioning the assembly formed by the tooling or positioning tooling O1 and the preform, the flexible envelope system Es described above is for example placed on the upper surface of the tooling O1 in order to cover the upper flat surfaces of the latter as well as the cavity G framed by the latter. A peripheral fastening (e.g., by adhesive) device or system S1 may be arranged on the upper surface of the flexible envelope Es in Figure 7.

A core C of predefined shape is also placed inside the stiffener preform Pr, more particularly in the concave area thereof. This core has the features described above, which will not be repeated here.

A skin preform Pp in accordance with what has been described above is positioned opposite the stiffener preform Pr and the local rigid stiffener tooling Or" and extends transversely opposite the portions of the flexible envelope Es that cover the upper surface of the positioning tooling O1 on either side of the cavity G (upper flat surfaces). The surface of the skin preform that faces the stiffener preform (first surface Sp1 of Figure 1) is more particularly disposed against the fastening device S1 in order to ensure temporary fastening of the skin preform to the flexible envelope. The relative arrangement between the skin preform, stiffener preform and stiffener tooling are in accordance with those described in the assembly structure in connection with Figure 1 and optionally either of the figures following it.

The use of a flexible sealed envelope (bag) as described above, which is arranged to cover the stiffener tooling and the stiffener preform, as well as the skin preform, which covers the upper surface of the positioning tooling O1 and cooperates with the skin tooling O2 in a sealed manner (via the device J) leads to a repeatable process and reduces the operator intervention time (repeatable sealing operation).

It should be noted that multiple stiffener preforms can be placed in parallel cavities (not shown) of the positioning tooling before the skin preform covers them.

Furthermore, a sealing device J, for example peripheral, is disposed at the periphery of the upper surface of the flexible envelope Es so as to surround the stiffener Pr and skin Pp preforms.

As shown in Figure 8, a rigid skin tooling O2 is positioned above the previously described structure and more particularly opposite the second surface of the skin preform Pp and against the surrounding sealing device J. The rigid skin tooling O2 can be structured on its inner surface intended to be oriented opposite the second surface of the skin preform Pp so as to match the shape of the latter and the shape of the flexible envelope Es with the sealing device. This tooling O2 comprises the features that have been described above in connection with the assembly structure of Figures 1 and possibly the following Figures and, in addition, also forms here a resin infusion tooling. To this end, the tooling O2 comprises one or more conduits or passages C1, C2 which here pass through the tooling in its thickness in the vertical direction. The arrangement illustrated in Figure 8 defines between the tooling O2 and the flexible envelope Es an internal volume with respect to the outside of the assembly structure which can only communicate with the outside through the conduit(s) C1, C2. This or these conduits can be connected to a vacuum pump (not shown) and serve to create a differential pressure between the outside air at atmospheric pressure and the volume delimited by the tooling 02 and the flexible envelope Es and which is at an absolute pressure lower than the atmospheric pressure.

In accordance with an alternative, the resin is introduced after the sealing of the flexible envelope Es and the subjecting to a vacuum of the internal volume of the flexible envelope Es and the tooling O1 by a process referred to as infusion or light resin transfer molding (RTM).

In other alternatives, the resin is supplied with the placement of the textile preforms, or the textile preforms are made of pre-impregnated fibers, or resin films are positioned along at least one of the textile layers, or between some of the layers, or between all the textile layers.

In the case of liquid resin infusion (LRI) or light RTM processes, at least one of the holes is used to inject a resin in a liquid state into this internal volume.

In accordance with an alternative, when the flexible envelope is pressed against the preforms and tooling by the vacuum, the positioning tooling O1 can be removed prior to injection to allow further positioning of other stiffeners, while injecting the resin into the assembly structure.

After injection of the resin by liquid means, by LRI, by RTM or by any other similar process, a consolidation step is carried out during which the resin is hardened (by application of suitable temperature and pressure constraints known to the person skilled in the art) in order to intimately bind the textile yarns of the stiffener and skin preforms (textile matrix of the composite material) to obtain the desired composite material part.

The part thus obtained (composite part comprising one or more stiffeners joined to a skin) can then be demolded by removing the rigid tooling and the flexible sealed barrier Es.

Various other techniques can be used to bring the resin into the assembly structure and to consolidate the preforms together:
- in accordance with a resin film infusion (RFI) or resin spray transfer (RST) technique, uncured resin films are positioned or sprayed parallel to the textile preforms in the closed internal volume between the flexible envelope and the skin tooling After the closed volume has been evacuated, the preforms and films are subjected to a temperature that allows the resin to soften and, under the combined action of the vacuum and capillary action, the resin colonizes the pore space of the preforms and is cured (the part can then be demolded);
- in accordance with a pre-impregnation technique, in the closed internal volume between the flexible envelope and the skin tooling, the preforms that are positioned are made up of layers of textiles and fibrous materials that have been pre-impregnated with resin. After the closed volume has been evacuated, the pre-impregnated preforms are subjected to a temperature that allows the resin to soften, thus binding the textile preforms together with the resin, which is then cured (the part can then be demolded).

Figure 9 illustrates a configuration in which the structure of Figure 8 has been turned over, thus bringing the positioning tooling O1 above into the structure and the rigid skin tooling O2 below. In this configuration, the positioning tooling O1 is removed.

It should be noted that this turning over can take place before introducing the resin into the internal volume between the skin tooling and the flexible envelope, but after creating a vacuum in this volume in order to press the flexible envelope against the facing components of the structure (stiffener tooling, skin preform, skin tooling, etc.). It is then possible to remove the positioning tooling O1 which is then available earlier in the manufacturing process to be reused again for the manufacturing of other parts (reduced job time). This makes the manufacturing process more flexible.

As already described above, Figure 10 illustrates a structure similar to Figure 1 in which the skin preform Pp, the stiffener preform Pr, the stiffener tooling Or, the tooling Op (skin tooling O2 in Figures 8 and 9) and the core C occupying the volume V are curved.

It should be noted that the flexible envelope (in any configuration described above) may cover only the second surface of the skin preform and the contours of the rigid stiffener tooling (in which case the rigid stiffener tooling must be sealed over the entire surface where the flexible envelope is not present).

Generally, the skin and stiffener preforms are produced ("produced" means assembled and shaped from cut coupons of textile matting) prior to placement on the skin and stiffener tooling, as for example in the manufacture of the stiffener preform described above with reference to Figure 6. Alternatively, the skin and stiffener preforms may be produced during installation on the tooling.

It should be noted that additional air and resin drainage materials can be deployed between the preforms and the flexible envelope to promote homogeneous compaction of the preforms and promote resin diffusion.

In general:
- the geometry of the whole part (skin and stiffener) and the quality of the external surface of the skin are perfectly controlled thanks to the rigid skin tooling whose internal face facing the skin preform has a configuration adapted to match the shape of the skin preform;
- the geometry of the generally omega-shaped cross-section is perfectly controlled thanks to the rigid stiffener tooling;
- the compaction of the skin and stiffener textile preforms, and therefore the fiber volume rate in the composite, are controlled by the ability to perform transverse compactions by hydrostatic pressure (vacuum compaction favors the control of fiber and resin volume rates);
- manufacturing defects are reduced thanks to process sequences simplifying and improving the robustness of preform handling and forming.

It should be noted that the composite parts obtained by the process described above (and its alternatives) can be used in aeronautics and, for example, to form external reverser panels, fan cowl doors, external air inlet shapes, landing gear door panels, etc.

Although the present description refers to specific example embodiments, modifications may be made to these examples without departing from the general scope of the invention as defined by the claims. Consequently, the description and drawings should be considered in an illustrative rather than a restrictive sense.

## Claims

1. An assembly structure (10) for manufacturing a composite part comprising a stiffener joined to a skin from skin and stiffener preforms, the assembly structure comprising:
- a set of preforms that comprises
a skin preform (Pp) having first and second opposing surfaces (Sp1, Sp2) a stiffener preform (Pr) of generally omega-shaped cross-section having first and second opposing surfaces (Sr1, Sr2), the first surface of the stiffener preform being disposed opposite the first surface of the skin preform, the stiffener preform extending along the first surface of the skin preform, on the one hand, along a longitudinal axis (X) and, on the other hand, transversely to this longitudinal axis,
- a rigid skin tooling (Op, O2) disposed opposite the entire second surface of the skin preform,
- at least one local rigid stiffener tooling (Or1, Or2; Or'; Or1'; Or2') extending longitudinally and transversely so as to cover at least partially the second surface of the stiffener preform (Pr), said at least one local rigid stiffener tooling (Or1, Or2; Or') extending transversely around the stiffener preform cross-section (Pr) with a transverse dimension smaller than the transverse dimension of the first surface of the skin preform (Pp),
- at least one flexible envelope (Es) covering at least a portion of said at least one local rigid stiffener tooling (Or1, Or2; Or'; Or1'; Or2') and the first surface (Sp1) of the skin preform,
the assembly structure further comprising a positioning tooling (O1), **characterized in that** the positioning tooling (O1) is disposed against the flexible envelope (Es), on the side opposite the skin tooling (Op,O2).

2. The assembly structure as claimed in claim 1, wherein the generally omega-shaped stiffener preform cross-section comprises two lateral flanks (F1, F2) which are each connected, by a first of their two opposite ends, to a common portion forming the apex (S) of the omega and, by each of their second opposite ends, to a foot (P1, P2) of the omega.

3. The assembly structure as claimed in claim 2, wherein said at least one local rigid stiffener tooling (Or1, Or2; Or'; Or1') extends transversely around the stiffener preform cross-section (Pr) covering the lateral flanks of the omega and at least a portion of one or both feet of the omega.

4. The assembly structure as claimed in claim 2 or 3, wherein said at least one local rigid stiffener tooling (Or2') extends transversely around the stiffener preform cross-section (Pr) covering the lateral flanks and at least part of one or both feet of the omega and extending beyond the terminal end of at least one foot towards the first surface (Sp1) of the skin preform to be disposed directly opposite thereto.

5. The assembly structure as claimed in claim 3 or 4, wherein said at least one local rigid stiffener tooling has a portion located opposite each of the connection areas between each of the flanks and the adjacent foot of the omega of the stiffener preform, each tooling portion having a predetermined geometric radius of curvature.

6. The assembly structure as claimed in one of claims 1 to 5, comprising a sealing device (J) between the flexible envelope (Es) and said at least one rigid skin tooling (Op,O2).

7. The assembly structure as claimed in one of claims 1 to 6, comprising, on the one hand, a device for creating a vacuum in an internal volume delimited jointly by the flexible envelope (Es) and said at least one rigid skin tooling (Op,O2) with respect to the outside of the assembly structure and, on the other hand, one or more conduits (C1, C2) for injecting a resin.

8. The assembly structure as claimed in the preceding claim, wherein said at least one rigid skin tooling (Op,O2) comprises a resin infusion tooling which has the conduit or conduits (C1, C2) for injecting a resin between this tooling and the flexible envelope (Es).

9. The assembly structure as claimed in claim 8, wherein the resin infusion tooling is disposed opposite the second surface (Sp2) of the skin preform and the flexible envelope (Es) is disposed opposite said at least one rigid stiffener tooling (Or1, Or2; Or'; Or1'; Or2') or the resin infusion tooling is disposed opposite the second surface (Sp2) of the skin preform and the flexible envelope (Es) is disposed opposite the at least one rigid stiffener tooling (Or1, Or2; Or'; Or1'; Or2').

10. The assembly structure as claimed in claim 1, wherein the positioning tooling (O1) comprises at least one cavity (G) whose shape is suitable for receiving said at least one rigid stiffener tooling and the stiffener preform as well as at least partially the flexible envelope.

11. A process for manufacturing a composite part comprising a stiffener joined to a skin from, on the one hand, a stiffener preform (Pr) of generally omega-shaped cross-section comprising first and second opposite surfaces (Sr1, Sr2) and, on the other hand, a skin preform (Pp) comprising first and second opposite surfaces (Sp1, Sp2), the process first comprising:
- positioning the first surface (Sr1) of the stiffener preform opposite the first surface (Sp1) of the skin preform, the stiffener preform (Pr) extending along the first surface of the skin preform, on the one hand, along a longitudinal axis (X) and, on the other hand, transversely to this longitudinal axis,
- positioning a rigid skin tooling (Op,O2) opposite the entire second surface (Sp2) of the skin preform,
- positioning at least one local rigid stiffener tooling (Or1, Or2; Or'; Or1'; Or2) relative to the stiffener preform (Pr) so that said at least one local rigid stiffener tooling at least partially covers the opposite second surface (Sr2) of the stiffener preform by extending transversely around the stiffener preform cross-section along a transverse dimension smaller than the transverse dimension of the first surface of the skin preform,
- positioning at least one flexible envelope so as to envelop said at least one local rigid stiffener tooling and the first surface of the skin preform,
the process further comprising positioning a positioning tooling (O1) against the flexible envelope (Es), on the side opposite the skin tooling (Op,O2).

12. The process as claimed in the preceding claim, wherein a core is positioned within the hollow stiffener preform, on the first surface side thereof, prior to positioning the stiffener preform relative to the skin preform.

13. The process as claimed in the preceding claim, wherein the core is hollow or is a solid and, whatever the configuration, the core is permanent or removable.

14. The process as claimed in one of the preceding claims, wherein the stiffener preform is formed within said at least one rigid stiffener tooling prior to simultaneous positioning of the stiffener preform assembly and said at least one rigid stiffener tooling relative to the skin preform.

15. The process as claimed in one of the preceding claims, further comprising consolidating the set of stiffener and skin preforms thus positioned by polymerizing a resin intimately bonding these preforms together.

16. The process as claimed in the preceding claim, wherein the resin is injected by liquid means into the set of preforms or the preforms are pre-impregnated with resin or the resin is present in the form of resin films disposed adjacent to the set of preforms.

## Patentansprüche

1. Montagestruktur (10) zum Herstellen eines Verbundteils, umfassend eine Versteifung, die mit einer Haut verbunden ist, aus einer Haut- und Versteifungsvorform, die Montagestruktur umfassend:
- einen Satz Vorformen, der Folgendes umfasst
eine Hautvorform (Pp), die eine erste und eine zweite gegenüberliegende Oberfläche (Sp1, Sp2) aufweist,
eine Versteifungsvorform (Pr) mit generell omega-förmigem Querschnitt, die eine erste und eine zweite gegenüberliegende Oberfläche (Sr1, Sr2) aufweist, wobei die erste Oberfläche der Versteifungsvorform gegenüber der ersten Oberfläche der Hautvorform angeordnet ist, sich die Versteifungsvorform entlang der ersten Oberfläche der Hautvorform einerseits entlang einer Längsachse (X) und andererseits quer zu dieser Längsachse erstreckt,
- eine starre Hautform (Op,O2), die gegenüber der gesamten zweiten Oberfläche der Hautvorform angeordnet ist,
- - mindestens eine lokale starre Versteifungsform (Or1, Or2; Or'; Or1', Or2'), die sich längs und quer erstreckt, um zumindest teilweise die zweite Oberfläche der Versteifungsvorform (Pr) zu bedecken, wobei sich die mindestens eine lokale starre Versteifungsform (Or1, Or2; Or') quer um den Querschnitt der Versteifungsvorform (Pr) mit einer Querabmessung erstreckt, die kleiner ist als die Querabmessung der ersten Oberfläche der Hautvorform (Pp),
- mindestens eine flexible Hülle (Es), die zumindest einen Abschnitt der mindestens einen lokalen starren Versteifungsform (Or1, Or2; Or'; Or1'; Or2') und die erste Oberfläche (Sp1) der Hautvorform bedeckt,
die Montagestruktur ferner umfassend eine Positioniervorrichtung (O1), **dadurch gekennzeichnet, dass** die Positioniervorrichtung (O1) an der flexiblen Hülle (Es) auf der gegenüberliegenden Seite der Hautform (Op, O2) angeordnet ist.

2. Montagestruktur nach Anspruch 1, wobei der generell omega-förmige Querschnitt der Versteifungsvorform zwei seitliche Flanken (F1, F2) umfasst, die jeweils mit einem ersten ihrer beiden gegenüberliegenden Enden an einem gemeinsamen Abschnitt verbunden sind, der die Spitze (S) des Omegas bildet, und mit jeweils ihrem zweiten gegenüberliegenden Ende mit einem Fuß (P1, P2) des Omegas verbunden sind.

3. Montagestruktur nach Anspruch 2, wobei sich die mindestens eine lokale starre Versteifungsform (Or1, Or2; Or'; Or1') quer um den Querschnitt der Versteifungsvorform (Pr) erstreckt und die seitlichen Flanken des Omegas und zumindest einen Abschnitt eines oder beider Füße des Omegas bedeckt.

4. Montagestruktur nach Anspruch 2 oder 3, wobei sich die mindestens eine lokale starre Versteifungsform (Or2') quer um den Querschnitt der Versteifungsvorform (Pr) erstreckt und die seitlichen Flanken und zumindest einen Teil eines oder beider Füße des Omegas bedeckt und sich über das Endstück von mindestens einem Fuß hinaus in Richtung der ersten Oberfläche (Sp1) der Hautvorform erstreckt, um dieser direkt gegenüber zu sein.

5. Montagestruktur nach Anspruch 3 oder 4, wobei die mindestens eine lokale starre Versteifungsform einen Abschnitt aufweist, der sich gegenüber von jedem der Verbindungsbereiche zwischen jeder Flanke und dem angrenzenden Fuß des Omegas der Versteifungsvorform befindet, wobei jeder Formabschnitt einen vorbestimmten geometrischen Krümmungsradius aufweist.

6. Montagestruktur nach einem der Ansprüche 1 bis 5, umfassend eine Dichtungsvorrichtung (J) zwischen der flexiblen Hülle (Es) und der mindestens einen starren Hautform (Op, O2).

7. Montagestruktur nach einem der Ansprüche 1 bis 6, umfassend einerseits eine Vorrichtung zum Erzeugen eines Vakuums in einem Innenvolumen, das gemeinsam durch die flexible Hülle (Es) und die mindestens eine starre Hautform (Op, O2) gegenüber der Außenseite der Montagestruktur begrenzt ist, und andererseits eine oder mehrere Leitungen (C1, C2) zum Einspritzen eines Harzes.

8. Montagestruktur nach dem vorherigen Anspruch, wobei die mindestens eine starre Hautform (Op, O2) eine Harzinfusionsform umfasst, die die Leitung oder die Leitungen (C1, C2) zum Einspritzen eines Harzes zwischen dieser Form und der flexiblen Hülle (Es) aufweist.

9. Montagestruktur nach Anspruch 8, wobei die Harzinfusionsform gegenüber der zweiten Oberfläche (Sp2) der Hautvorform angeordnet ist und die flexible Hülle (Es) gegenüber der mindestens einen starren Versteifungsform (Or1, Or2; Or'; Or1'; Or2') angeordnet ist oder wobei die Harzinfusionsform gegenüber der zweiten Oberfläche (Sp2) der Hautvorform angeordnet ist und die flexible Hülle (Es) gegenüber der mindestens einen starren Versteifungsform (Or1, Or2; Or'; Or1'; Or2') angeordnet ist.

10. Montagestruktur nach Anspruch 1, wobei die Positioniervorrichtung (O1) mindestens einen Hohlraum (G) umfasst, deren Form geeignet ist, um die mindestens eine starre Versteifungsform und die Versteifungsvorform sowie zumindest teilweise die flexible Hülle aufzunehmen.

11. Verfahren zum Herstellen eines Verbundteils, umfassend eine Versteifung, die mit einer Haut verbunden ist, aus einerseits einer Versteifungsvorform (Pr) mit generell omega-förmigem Querschnitt, die eine erste und eine zweite gegenüberliegende Fläche (Sr1, Sr2) aufweist, und andererseits einer Hautvorform (Pp) mit einer ersten und einer zweiten gegenüberliegenden Fläche (Sp1, Sp2), das Verfahren zunächst umfassend:
- Positionieren der ersten Fläche (Sr1) der Versteifungsvorform gegenüber der ersten Fläche (Sp1) der Hautvorform, wobei sich die Versteifungsvorform (Pr) entlang der ersten Fläche der Hautvorform einerseits entlang einer Längsachse (X) und andererseits quer zu dieser Längsachse erstreckt,
- Positionieren einer starren Hautform (Op,O2) gegenüber der gesamten zweiten Fläche (Sp2) der Hautvorform,
- Positionieren von mindestens einer lokalen starren Versteifungsform (Or1, Or2; Or'; Or1'; Or2) in Bezug auf die Versteifungsvorform (Pr), sodass die mindestens eine lokale starre Versteifungsform zumindest teilweise die gegenüberliegende zweite Oberfläche (Sr2) der Versteifungsvorform abdeckt, indem es sich quer um den Querschnitt der Versteifungsvorform entlang einer Querabmessung erstreckt, die kleiner ist als die Querabmessung der ersten Fläche der Hautvorform,
- Positionieren von mindestens einer flexiblen Hülle, sodass sie die mindestens eine lokale starre Versteifungsform und die erste Oberfläche der Hautvorform umhüllt,
das Verfahren ferner umfassend ein Positionieren eines Positionierwerkzeugs (O1) an der flexiblen Hülle (Es) auf der gegenüberliegenden Seite der Hautform (Op,O2).

12. Verfahren nach dem vorherigen Anspruch, wobei ein Kern innerhalb der hohlen Versteifungsvorform auf deren erster Flächenseite positioniert wird, bevor die Versteifungsvorform in Bezug auf die Hautvorform positioniert wird.

13. Verfahren nach dem vorherigen Anspruch, wobei der Kern hohl oder massiv ist und der Kern unabhängig von der Ausführung dauerhaft oder entfernbar ist.

14. Verfahren nach einem der vorherigen Ansprüche, wobei die Versteifungsvorform innerhalb der mindestens einen starren Versteifungsform gebildet wird, bevor die Anordnung aus Versteifungsvorform und der mindestens einen starren Versteifungsform gleichzeitig in Bezug auf die Hautvorform positioniert wird.

15. Verfahren nach einem der vorherigen Ansprüche, ferner umfassend ein Konsolidieren der somit positionierten Gesamtheit aus Versteifungs- und Hautvorform durch Polymerisation eines Harzes, das diese Vorformen innig miteinander verbindet.

16. Verfahren nach dem vorherigen Anspruch, wobei das Harz durch flüssige Mittel in den Satz Vorformen eingespritzt wird oder die Vorformen mit Harz vorimprägniert sind oder das Harz in Form von Harzfilmen vorhanden, die an dem Satz Vorformen angeordnet sind.

## Revendications

1. Structure d'assemblage (10) pour la fabrication d'une pièce en composite comprenant un raidisseur solidarisé à une peau à partir de préformes de peau et de raidisseur, la structure d'assemblage comprenant :
- un ensemble de préformes qui comprend
une préforme de peau (Pp) comportant une première et une deuxième surfaces opposées (Sp1, Sp2),
une préforme de raidisseur (Pr) de section transversale en forme générale de oméga comportant une première et une deuxième surfaces opposées (Sr1, Sr2), la première surface de la préforme de raidisseur étant disposée en vis-à-vis de la première surface de la préforme de peau, la préforme de raidisseur s'étendant le long de la première surface de la préforme de peau, d'une part, suivant un axe longitudinal (X) et, d'autre part, transversalement par rapport à cet axe longitudinal,
- un outillage rigide de peau (Op, O2) disposé en vis-à-vis de la totalité de la deuxième surface de la préforme de peau,
- au moins un outillage rigide local de raidisseur (Or1, Or2 ; Or' ; Or1' ; Or2') s'étendant longitudinalement et transversalement de manière à couvrir au moins en partie la deuxième surface de la préforme de raidisseur (Pr), ledit au moins un outillage rigide local de raidisseur (Or1, Or2 ; Or') s'étendant transversalement autour de la section transversale de préforme de raidisseur (Pr) suivant une dimension transversale inférieure à la dimension transversale de la première surface de la préforme de peau (Pp),
- au moins une enveloppe souple (Es) couvrant au moins une partie dudit au moins un outillage rigide local de raidisseur (Or1, Or2 ; Or' ; Or1' ; Or2') et la première surface (Sp1) de la préforme de peau,
la structure d'assemblage comprenant en outre un outil de positionnement (O1), **caractérisé en ce que** l'outil de positionnement (O1) est disposé contre l'enveloppe souple (Es), du côté opposé à l'outillage de peau (Op, O2).

2. Structure d'assemblage selon la revendication 1, dans laquelle la section transversale de préforme de raidisseur en forme générale de oméga comprend deux flancs latéraux (F1, F2) qui sont raccordés chacun, par une première de leurs deux extrémités opposées, à une portion commune formant le sommet (S) du oméga et, par chacune de leur deuxième extrémité opposée, à un pied (P1, P2) du oméga.

3. Structure d'assemblage selon la revendication 2, dans laquelle ledit au moins un outillage rigide local de raidisseur (Or1, Or2 ; Or' ; Or1') s'étend transversalement autour de la section transversale de préforme de raidisseur (Pr) en couvrant les flancs latéraux du oméga et au moins une partie d'un ou des deux pieds du oméga.

4. Structure d'assemblage selon la revendication 2 ou 3, dans laquelle ledit au moins un outillage rigide local de raidisseur (Or2') s'étend transversalement autour de la section transversale de préforme de raidisseur (Pr) en couvrant les flancs latéraux et au moins une partie d'un ou des deux pieds du oméga et en s'étendant au-delà de l'extrémité terminale d'au moins un pied en direction de la première surface (Sp1) de la préforme de peau pour être disposé directement en vis-à-vis de celle-ci.

5. Structure d'assemblage selon la revendication 3 ou 4, dans laquelle ledit au moins un outillage rigide local de raidisseur présente une partie située en regard de chacune des zones de raccordement entre chacun des flancs et le pied adjacent du oméga de la préforme de raidisseur, chaque partie d'outillage possédant un rayon géométrique de courbure prédéterminée.

6. Structure d'assemblage selon l'une des revendications 1 à 5, comprenant un dispositif d'étanchéité (J) entre l'enveloppe souple (Es) et ledit au moins un outillage rigide de peau (Op, O2).

7. Structure d'assemblage selon l'une des revendications 1 à 6, comprenant, d'une part, un dispositif de mise en dépression d'un volume interne délimité conjointement par l'enveloppe souple (Es) et ledit au moins un outillage rigide de peau (Op, O2) par rapport à l'extérieur de la structure d'assemblage et, d'autre part, un ou plusieurs conduits (C1, C2) pour injecter une résine.

8. Structure d'assemblage selon la revendication précédente, dans laquelle ledit au moins un outillage rigide de peau (Op, O2) comprend un outil d'infusion de résine qui comporte le ou les conduits (C1, C2) pour injecter une résine entre cet outil et l'enveloppe souple (Es).

9. Structure d'assemblage selon la revendication 8, dans lequel l'outil d'infusion de résine est disposé en regard de la deuxième surface (Sp2) de la préforme de peau et l'enveloppe souple (Es) est disposée en regard dudit au moins un outillage rigide de raidisseur (Or1, Or2 ; Or' ; Or1' ; Or2') ou l'outil d'infusion de résine est disposé en regard de la deuxième surface (Sp2) de la préforme de peau et l'enveloppe souple (Es) est disposée en regard dudit au moins un outillage rigide de raidisseur (Or1, Or2 ; Or' ; Or1' ; Or2').

10. Structure d'assemblage selon la revendication 1, dans lequel l'outil de positionnement (O1) comporte au moins une cavité (G) dont la forme est adaptée pour recevoir ledit au moins un outillage rigide de raidisseur et la préforme de raidisseur ainsi qu'au moins en partie l'enveloppe souple.

11. Procédé de fabrication d'une pièce en composite comprenant un raidisseur solidarisé à une peau à partir, d'une part, d'une préforme de raidisseur (Pr) de section transversale en forme générale de oméga comportant une première et une deuxième surfaces opposées (Sr1, Sr2) et, d'autre part, d'une préforme de peau (Pp) comportant une première et une deuxième surfaces opposées (Sp1, Sp2), le procédé comprenant préalablement :
- le positionnement de la première surface (Sr1) de la préforme de raidisseur en vis-à-vis de la première surface(Sp1) de la préforme de peau, la préforme de raidisseur (Pr) s'étendant le long de la première surface de la préforme de peau, d'une part, suivant un axe longitudinal (X) et, d'autre part, transversalement par rapport à cet axe longitudinal,
- le positionnement d'un outillage rigide de peau (Op, O2) en vis-à-vis de la totalité de la deuxième surface (Sp2) de la préforme de peau,
- le positionnement d'au moins un outillage rigide local de raidisseur (Or1, Or2 ; Or' ; Or1' ; Or2') relativement à la préforme de raidisseur (Pr) de manière à ce que ledit au moins un outillage rigide local de raidisseur couvre au moins en partie la deuxième surface opposée (Sr2) de la préforme de raidisseur en s'étendant transversalement autour de la section transversale de préforme de raidisseur suivant une dimension transversale inférieure à la dimension transversale de la première surface de la préforme de peau,
- le positionnement d'au moins une enveloppe souple de manière à envelopper ledit au moins un outillage rigide local de raidisseur et la première surface de la préforme de peau, le procédé comprenant en outre le positionnement d'un outil de positionnement (O1) contre l'enveloppe souple (Es), du côté opposé à l'outillage de peau (Op, O2).

12. Procédé selon la revendication précédente, selon lequel un noyau est positionné à l'intérieur de la préforme de raidisseur creuse, du côté de sa première surface, préalablement au positionnement de la préforme de raidisseur relativement à la préforme de peau.

13. Procédé selon la revendication précédente, selon lequel le noyau est creux ou est un solide plein et, quelle que soit la configuration, le noyau est permanent ou éliminable.

14. Procédé selon l'une des revendications précédentes, selon lequel la préforme de raidisseur est formée à l'intérieur dudit au moins un outillage rigide de raidisseur préalablement au positionnement simultané de l'ensemble de la préforme de raidisseur et dudit au moins un outillage rigide de raidisseur relativement à la préforme de peau.

15. Procédé selon l'une des revendications précédentes, comprenant en outre la consolidation de l'ensemble des préformes de raidisseur et de peau ainsi positionnées par polymérisation d'une résine liant entre elles de manière intime ces préformes.

16. Procédé selon la revendication précédente, selon lequel la résine est injectée par voie liquide dans l'ensemble des préformes ou les préformes sont pré-imprégnées de résine ou la résine est présente sous la forme de films de résine disposés à côté de l'ensemble des préformes.
